(19) Europäisches Patentamt

European Patent Office

Office européen des brevets

(11) EP 0 607 526 B1

(12) **EUROPÄISCHE PATENTSCHRIFT**

(45) Veröffentlichungstag und Bekanntmachung des Hinweises auf die Patenterteilung:
**20.11.1996 Patentblatt 1996/47**

(51) Int Cl.$^6$: **G01C 19/72**

(21) Anmeldenummer: **93118692.8**

(22) Anmeldetag: **20.11.1993**

(54) **Verfahren und Vorrichtung zum Korrigieren der Messsignale eines Faserkreisels**

Method and device for correcting the measuring signals of a fibre gyroscope

Méthode et dispositif pour corriger les signaux de mesure d'un gyroscope à fibre

(84) Benannte Vertragsstaaten:
**DE FR GB IT**

(30) Priorität: **21.01.1993 DE 4301479**

(43) Veröffentlichungstag der Anmeldung:
**27.07.1994 Patentblatt 1994/30**

(73) Patentinhaber: **Daimler-Benz Aerospace Aktiengesellschaft**
**81663 München (DE)**

(72) Erfinder:
- **Poisel, Hans, Prof. Dr.**
  **D-91227 Leinburg (DE)**
- **Trommer, Gert, Dr.**
  **D-80809 München (DE)**

(56) Entgegenhaltungen:
EP-A- 0 486 766          DE-A- 3 926 313

- ELECTRONICS LETTERS, Bd. 25, Nr. 10, 11. Mai 1989, Stevenage, GB, Seiten 682-683, XP205250; D.B. MORTIMORE : "Monolithic 4x4 single-mode fused coupler"

# Beschreibung

Aus der DE-OS 39 26 313 ist es bekannt, daß Faserkreisel mit Hilfe von 4x4-Kopplern nahe am Quadraturpunkt betrieben werden können, ohne daß ein zusätzlicher Phasenmodulator notwendig ist. Im Bereich dieses Quadraturpunktes haben die Ausgangssignale der Detektoren, üblicherweise Photodioden, eine sinusförmige Abhängigkeit von der die Drehgeschwindigkeit des Kreisels bestirnenden Sagnac-Phasen, so daß solche Faserkreisel insbesondere bei kleinen Drehraten eine maximale Empfindlichkeit aufweisen.

Der 4x4-Koppler eines solchen Faserkreisels besteht aus vier aneinanderliegenden und aneinander angeschmolzenen Monomode-Lichtleitfasern mit vier Toren bzw. Armen zu beiden Seiten seines Koppelbereiches. Auf der einen Seite des Koppelbereiches ist mit einem Arm eine Lichtquelle, vorzugsweise ein ELED und mit zumindest zwei anderen Armen, in der Regel mit allen drei übrigen Armen, je ein Detektor verbunden. Auf der anderen Seite des Koppelbereiches sind an zwei Arme die beiden Enden einer aus einer Monomode-Lichtleitfaser gewickelten Faserspule angeschlossen, wohingegen die beiden anderen Arme freigelassen sind. Diese freien Arme des Kopplers auf Seiten der Faserspule können noch mit Überwachungsschaltungen verbunden werden, mit denen z.B. die Intensität der Lichtquelle überprüft und bei den Meßergebnissen berücksichtigt wird; eine spezielle Ausgestaltung dieser Überwachungsschaltungen ist in der genannten DE-OS 39 26 313 nicht beschrieben.

Die Funktion des Faserkreisels ist folgendermaßen:

Das Licht der Lichtquelle wird in einen der vier Eingangsarme des (4x4)-Kopplers eingestrahlt und durch diesen gleichmäßig auf die beiden Ausgangsarme verteilt, an die die Enden der Faserspule angeschlossen sind. Die hierdurch aufgespaltenen Lichtwellen durchlaufen gegensinnig die Monomode-Faserspule und werden wieder in die beiden Arme des Kopplers zurückgeführt. Im inneren Koppelbereich des Kopplers interferieren diese Lichtanteile miteinander, und es ergibt sich daraus eine Phasen/Amplituden-Transformation. Auf diese Weise wird die durch eine Drehung des Kreisels hervorgerufene Sagnac-Phasenverschiebung der gegensinnig in der Faserspule umlaufenden Lichtwellen in Intensitätsänderungen an den Kopplerarmen auf Seiten der Lichtquelle überführt, die durch Photodioden detektiert werden können. Ein Teil des in den einen Arm eingestrahlten Lichtes verläßt, von Drehungen des Kreisels unbeeinflußt, den Koppler an den beiden spulenseitigen freien Ausgangsarmen.

Die Ausgangssignale der Photodioden als Funktion der Sagnac-Phase $\phi_S$ und der dadurch bestimmten Drehgeschwindigkeit sowie der Intensität $I_0$ der Lichtquelle sind gegeben durch:

$$P_i: = (A_i + B_i \cdot \cos(\phi_S + C_i)) \cdot I_0 \ (i=2,3,4) \qquad (1)$$

wobei die Kreiselkoeffizienten $A_i$, $B_i$ und $C_i$ Funktionen der Koppelkonstanten $K_{ij}$ zwischen den einzelnen Lichtkanälen im Koppelbereich sind, mit i und j von 1 bis 4. Diese Koeffizienten können in einer Eichprozedur bestimmt werden, indem der Faserkreisel auf einem geeichten Drehtisch mit mehreren bekannten Drehgeschwindigkeiten in Rotation versetzt wird, die Ausgangssignale $P_i$ als Funktion der bekannten Drehgeschwindigkeit gemessen und aufgezeichnet und die unbekannten Kreiselkoeffizienten schließlich, vorzugsweise mit Hilfe eines sogenannten Least-Square-Fits, berechnet werden. Die so erhaltenen Koeffizienten werden dann in einer Auswerteschaltung, z.B. innerhalb eines Rechners gespeichert. Mit Hilfe der nun bekannten Koeffizienten läßt sich die jeweilige Drehgeschwindigkeit durch Auswerten der obigen Gleichung (1) bestimmen.

Das Problem, welches dabei auftritt, ist, daß die Mittenwellenlänge der Lichtquelle, z.B. einer kantenemittierenden Lumineszenzdiode einer Superlumineszenzdiode oder einer Laserdiode, durch Temperatureinflüsse variiert. Eine Variation der Wellenlänge hat jedoch auch eine Variation der "Koppelkonstanten" im (4x4)-Koppler zur Folge, wobei eine Erhöhung der Wellenlänge eine stärkere Kopplung bewirkt. Die obigen Kreiselkoeffizienten sind daher ebenfalls von der Wellenlänge abhängig. Hat man diese Koeffizienten bei einer bestimmten Soll-Wellenlänge mit Hilfe der Eichprozedur bestimmt, so liefert die Auswertung der obigen Gleichung (1) mit diesen Koeffizienten eine fehlerhafte Drehgeschwindigkeit, wenn die Lichtquelle während der Messung eine von der Soll-Wellenlänge abweichende Wellenlänge aufweist.

Für eine fehlerfreie Ermittlung der Drehgeschwindigkeit müßte daher die Mittenwellenlänge der Lichtquelle auf die während der Eichprozedur eingestellte Soll-Wellenlänge stabilisiert werden. Die Wellenlänge einer auf einem Chip aufgebauten Halbleiter-Lichtquelle, wie einer Laser- oder Lumineszenzdiode etc., kann durch Variation der Chiptemperatur z.B. mittels eines Peltierelementes und durch Variation des Betriebs- oder Injektionsstromes eingestellt werden. Es läge daher nahe, die Chiptemperatur z.B. mit einer Kombination aus einem Peltierelement zum Heizen und Kühlen und einem Thermistor zum Bestimmen der Chiptemperatur zu stabilisieren und zusätzlich den Injektionsstrom konstant zu halten. Der Einsatzbereich von Faserkreiseln umfaßt jedoch häufig einen so weiten Temperaturbereich, z.B. zwischen etwa -60°C und +120°C, daß die Leistungsfähigkeit eines Peltierelementes bei vernünftigen Dimensionen nicht mehr ausreicht, den Chip innerhalb des gesamten Außentemperaturbereiches auf eine Soll-Temperatur zu stabilisieren.

Es ist daher die Aufgabe der Erfindung, ein Verfahren und eine Vorrichtung anzugeben, mit der eine einfache Kompensation der Fehler der Meßsignale vorgenommen werden kann, wobei diese Kompensation über einen breiten Temperaturbereich erfolgen kann.

Diese Aufgabe ist gemäß der Erfindung für ein Verfahren bzw. eine Vorrichtung durch die in den kennzeichnenden Teilen der beiden nebengeordneten Ansprüche gelöst.

Die Erfindung geht von der Überlegung aus, daß aufgrund der obigen Ausführungen abhängig von der Außentemperatur eine Variation der Chiptemperatur erfolgen muß, was wiederum eine Variation der Mittenwellenlänge zur Folge hat. Diese Variation kann entweder durch eine entsprechende Variation des Injektionsstromes kompensiert bzw. in der Signalauswertung mitberücksichtigt werden. Voraussetzung für ein Konstanthalten der Wellenlänge unter diesen Bedingungen ist daher eine exakte Messung der tatsächlich vorliegenden Wellenlänge. Mit der vorliegenden Erfindung ist eine sehr einfache Messung der Mittenwellenlänge der von der Lichtquelle in den Koppler eingekoppelten Strahlung zum Zweck der Stabilisierung möglich.

Der Lösungsweg, der mit der Erfindung eingeschlagen wird, ist verblüffend einfach, indem die Ausgangssignale an den freien Armen des Kopplers auf Seiten der Faserspule ausgenutzt werden. Die Ausgangssignale $P_{10}$ und $P_{40}$ der mit den freien Armen des Kopplers verbundenen Monitordioden sind gegeben durch

$$P_{10}(\lambda) = S_{10}(K_{ij}(\lambda)) \cdot I_0 \qquad (2)$$

$$P_{40}(\lambda) = S_{40}(K_{ij}(\lambda)) \cdot I_0 \qquad (3)$$

Diese Ausgangssignale sind jeweils ein Produkt einer Übertragungsfunktion $S_{10}$ bzw. $S_{40}$ und der Intensität $I_0$ der Lichtquelle. Die Übertragungsfunktionen sind wiederum abhängig von den Koppelkonstanten $K_{ij}$, die ihrerseits selbst eine Funktion der Wellenlänge $\lambda$ sind. Damit hängen auch die Ausgangssignale $P_{10}$ und $P_{40}$ von der Wellenlänge ab.

Wie oben erwähnt, nimmt bei optischen Richtkopplern der hier in Rede stehenden Art mit zunehmender Wellenlänge auch die Kopplung zwischen benachbarten Kanälen im Koppelbereich des Kopplers zu, weshalb einerseits die einen Nachbarkanal, hier den einen freien Arm des 4x4-Kopplers auf Seiten der Faserspule übergekoppelte Lichtleistung zunimmt, andererseits die direkt im Lichteinkoppelkanal an den anderen freien Arm des Kopplers übertragene Leistung abnimmt; vgl. etwa D. Mortimore, Electron.Lett. 25, Seite 682 (1989).

Die entscheidende Erkenntnis beruht nun darauf, daß die Meßsignale dann korrekt sind, wenn der Quotient der Ausgangssignale an den beiden freien Armen des Kopplers auf Seiten der Faserspule konstant bleibt. Der Quotient für die Ist-Wellenlänge wird daher mit dem Quotienten für die Soll-Wellenlänge verglichen, der mit Hilfe der oben erwähnten Eichprozedur bestimmt worden ist. Durch Regeln des Injektionsstromes der Lichtquelle und/oder deren Temperatur, z. B. durch Regeln des Stromes eines Peltierelementes, wird die Mittenwellenlänge der von der Lichtquelle emittierten Strahlung so geregelt, daß der gemessene Ist-Quotient gleich dem gespeicherten Soll- bzw. Referenzquotienten ist.

Mit diesen Maßnahmen ist auch bei einer Variation der Mittenwellenlänge innerhalb eines weiten Temperaturbereiches eine Korrektur der Meßsignale möglich.

Um zusätzlich Schwankungen der Intensität der Lichtquelle zu berücksichtigen, können bei der Signalauswertung die Ausgangssignale der einzelnen Meßdetektoren auf das Ausgangssignal eines der Monitordetektoren normiert werden, so daß der entsprechende Quotient der beiden Ausgangssignale nicht mehr von der Intensität abhängt. Dementsprechend hängt dann auch die daraus zu bestimmende Sagnac-Phase nicht mehr von der Intensität ab.

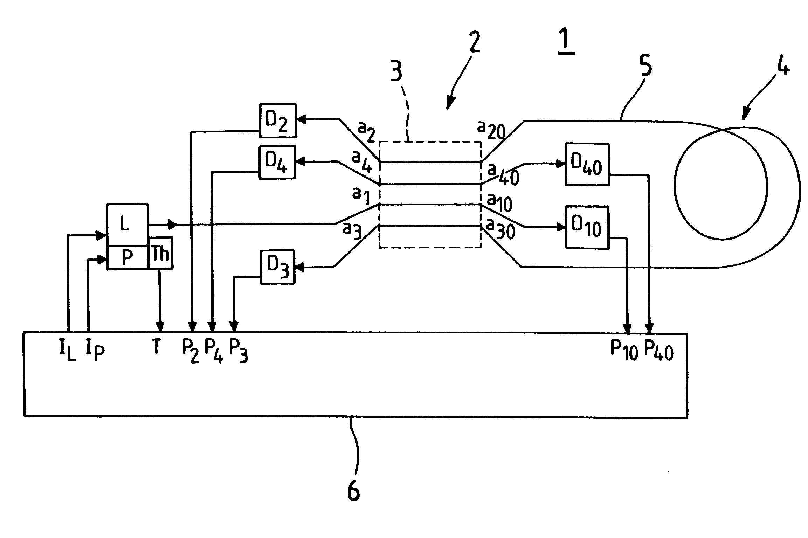

Die Erfindung ist in einem Ausführungsbeispiel anhand der einzigen Figur näher erläutert, in der ein Faserkreisel mit einer Auswerte- und Steuerschaltung zum Korrigieren der Meßwerte gemäß der Erfindung dargestellt ist.

Ein Faserkreisel 1 weist einen 4x4-Richtkoppler 2 auf, der an seinen beiden Seiten jeweils vier Arme $a_1$, $a_2$, $a_3$, $a_4$ bzw. $a_{10}$, $a_{20}$, $a_{30}$, $a_{40}$ aufweist. In der Figur ist der Koppelbereich des Kopplers gestrichelt dargestellt und mit 3 bezeichnet. Der Koppler wird in herkömmlicher Weise aus vier aneinanderliegenden Monomode-Lichtleitfasern hergestellt, die von einem Rohr aus Spezialquarzglas umfaßt werden, dessen Brechungsindex niedriger als derjenige der Lichtleitfasern ist. Anschließend wird diese Anordnung erwärmt und solange gezogen, bis die Lichtleistung einer in einen Arm eingekoppelten Lichtstrahlung gleichmäßig auf die vier Ausgangsarme aufgeteilt wird.

Mit dem Arm $a_1$ ist eine Lichtquelle, in diesem Fall eine ELED L verbunden, an die Arme $a_2$, $a_3$ und $a_4$ ist jeweils ein Meßdetektor $D_2$, $D_3$ bzw. $D_4$ angeschlossen.

Die gegenüberliegenden Arme $a_{20}$ und $a_{30}$ sind mit den beiden Enden einer Faserspule 4 aus einer langen gewickelten Monomode-Lichtleitfaser 5 verbunden. Die freien Arme $a_{10}$ und $a_{40}$ sind jeweils mit einem Monitordetektor $D_{10}$ bzw. $D_{40}$ verbunden.

Die Ausgänge sämtlicher Detektoren, d.h. der Meßdetektoren $D_2$, $D_3$ und $D_4$ sowie der Monitordetektoren $D_{10}$ und $D_{40}$ sind mit einer Auswerte- und Steuerschaltung 6 verbunden, die auch einen Kreiselrechner beinhaltet.

Mit dem Chip der ELED L ist noch ein Peltierelement P verbunden, dessen Betriebsstrom $I_P$ von der Auswerte- und Steuerschaltung 6 eingestellt wird. Mit dem Chip kann noch ein Thermistor Th verbunden sein, der die Chiptemperatur T mißt und an die Auswerte- und Steuerschaltung liefert. Der Injektionsstrom $I_L$ für die Laserdiode wird ebenfalls von der Auswerte- und Steuerschaltung 6 eingestellt.

Die Ausgangssignale $P_2$, $P_3$ und $P_4$ der Meßdioden $D_2$, $D_3$ bzw. $D_4$, gegeben durch die obige Gleichung (1), werden der Auswerte- und Steuerschaltung 6 zugeführt, ebenso die Ausgangssignale der Monitordioden $D_{10}$ und $D_{40}$, die durch die obigen Gleichungen (2) bzw. (3) definiert sind.

Mit Hilfe der oben angegebenen Eichprozedur zur Bestimmung der Koeffizienten $A_i$, $B_i$ und $C_i$ wird bei der Soll- bzw. Referenzwellenlänge $\lambda_0$ in der Auswerte- und Steuerschaltung das Verhältnis bzw. der Quotient $(P_{10}/P_{40})_0$ ermittelt und zusammen mit den Koeffizienten gespeichert.

Beim Betrieb des Faserkreisels wird nun ständig das Verhältnis der beiden Ausgangssignale $P_{10}$ und $P_{40}$ der beiden Monitordioden $D_{10}$ und $D_{40}$ bestimmt und mit dem abgespeicherten Soll-Verhältnis verglichen. Weichen die beiden Quotienten voneinander ab, so wird durch Einstellen des Injektionsstromes $I_L$ und/oder des Peltierstromes $I_P$ die Mittenwellenlänge der von dem Laser L emittierten Strahlung so geregelt, daß das jeweilige Ist-Verhältnis der Ausgangssignale $P_{10}$ und $P_{40}$ gleich dem gespeicherten Referenz- bzw. Sollverhältnis ist. Eine derartige Nachstellung der Mittenwellenlänge, bei der weiterhin der Faserkreisel geeicht bleibt, ist wesentlich einfacher und mit geringerer Energie möglich als eine Regelung auf stets konstante Chiptemperatur.

Damit die Sagnac-Phase unabhängig von Schwankungen der Intensität $I_0$ der Lichtquelle L ist, kann die Sagnac-Phase und damit die zu messende Drehgeschwindigkeit aus dem Quotienten $P_i/P_{10}$ ermittelt werden zu:

$$\frac{P_i}{P_{10}} = \frac{A_i + B_i \cos(\phi_S + C_i)}{S_{10}} \qquad (4)$$

Der Index i ist jeweils 2, 3 oder 4 entsprechend dem Index der Meß-Detektoren $D_2$, $D_3$ bzw. $D_4$. Der Ausdruck auf der rechten Seite der Gleichung (4) hängt nicht mehr von der Intensität $I_0$ der Lichtquelle ab, so daß daraus dann die korrekte Drehgeschwindigkeit errechnet werden kann.

## Patentansprüche

1. Verfahren zum Korrigieren der Meßsignale eines die Drehgeschwindigkeit messenden Faserkreisels, der einen (4x4)-Koppler (2) aus vier aneinanderliegenden und aneinader angeschmolzenen Lichtleitfasern mit vier Armen ($a_1$-$a_4$; $a_{10}$-$a_{40}$) zu beiden Seiten seines Koppelbereiches aufweist, wobei auf der einen Seite des Koppelbereiches mit einem Arm ($a_1$) eine mit vorgegebener Soll-Wellenlänge strahlende Lichtquelle (L), vorzugsweise eine Halbleiter-Lichtquelle, wie ein Laser oder dergleichen, und mit zumindest zwei anderen Armen ($a_2$-

$a_4$) je ein Meß-Detektor ($D_2$-$D_4$) verbunden ist und auf der anderen Seite des Koppelbereiches zwei Arme ($a_{20}$,$a_{30}$) mit den beiden Enden einer aus einer Monomode-Lichtleitfaser gewickelten Faserspule (4) verbunden sind, wobei die durch temperaturbedingte Drift der Wellenlänge der Lichtquelle verfälschten Meßsignale korrigiert werden, **dadurch gekennzeichnet,** daß die Ausgangssignale ($P_{10}$,$P_{40}$) an den beiden freien Armen ($a_{10}$,$a_{40}$) des Kopplers (2) auf Seiten der Faserspule (4) bei der Soll-Wellenlänge und bei der jeweiligen Ist-Wellenlänge gemessen werden und aus den jeweiligen Ausgangssignalen ein Soll- bzw. Ist-Verhältnis bestimmt wird, und daß die Temperatur und/oder der Betriebsstrom der Lichtquelle (L) so geregelt werden, daß das Ist-Verhältnis gleich dem Soll-Verhältnis ist.

2. Verfahren nach Anspruch 1, **dadurch gekennzeichnet,** daß die Ausgangssignale ($P_2$-$P_4$) an den mit Meß-Detektoren ($D_2$-$D_4$) verbundenen Armen ($a_2$-$a_4$) des (4x4)-Kopplers (2) auf Seiten der Lichtquelle (L) auf das Ausgangssignal an einem der beiden freien Arme ($a_{10}$, $a_{40}$) auf Seiten der Faserspule (4) bezogen werden, und daß aus diesem normierten Wert die ein Maß für die Drehgeschwindigkeit bildende Sagnac-Phase bestimmt wird.

3. Faserkreisel, der einen (4x4)-Koppler (2) aus vier aneinanderliegenden und aneinader angeschmolzenen Lichtleitfasern mit vier Armen ($a_1$-$a_4$; $a_{10}$-$a_{40}$) zu beiden den Seiten seines Koppelbereiches aufweist, wobei auf der einen Seite des Koppelbereiches mit einem Arm ($a_1$) eine mit vorgegebener Soll-Wellenlänge strahlende Lichtquelle (L), vorzugsweise eine Halbleiterlichtquelle, wie ein Laser oder dergleichen, und mit zumindest zwei anderen Armen ($a_2$-$a_4$) je ein Meß-Detektor ($D_2$-$D_4$) verbunden ist und auf der anderen Seite des Koppelbereiches zwei Arme ($a_{10}$,$a_{40}$) mit den beiden Enden einer aus einer Monomode-Lichtleitfaser gewickelten Faserspule (4) verbunden sind, **dadurch gekennzeichnet,** daß mit den beiden freien Armen ($a_{10}$, $a_{40}$) des Kopplers (2) auf Seiten der Faserspule (4) je ein Monitor-Detektor ($D_{10}$, $D_{40}$) verbunden ist, deren Ausgangssignale ($P_{10}$, $P_{40}$) einer Auswerte- und Steuerschaltung (6) zugeführt werden, in der das Soll-Verhältnis (($P_{10}/P_{40})_0$) der beiden Ausgangssignale bei der Soll-Wellenlänge (Lambda$_0$) gespeichert ist und das Ist-Verhältnis ($P_{10}/P_{40}$) bestimmt wird, daß für die Lichtquelle (L) eine Heiz- und Kühleinrichtung (P, Th) zum Einstellen der Temperatur (T) der Lichtquelle (L) und/oder eine Einrichtung (6) zum Einstellen des Betriebsstromes ($I_L$) der Lichtquelle (L) vorgesehen ist, die jeweils Einstellsignale von der Auswerte- und Steuerschaltung (6) erhalten, derart daß das Ist-Verhältnis gleich dem Soll-Verhältnis ist.

4. Vorrichtung nach Anspruch 3, dadurch gekennzeichnet, daß bei Verwendung einer Halbleiter-Lichtquelle (L) die Heiz- und Kühleinrichtung (P, Th) direkt an dem Chip der Lichtquelle (L) angebracht ist.

5. Vorrichtung nach Anspruch 3 oder 4, dadurch gekennzeichnet, daß als Heiz- und Kühleinrichtung ein Peltierelement (P) in Verbindung mit einem Thermistor (Th) zum Bestimmen der Temperatur (T) der Lichtquelle (L) vorgesehen ist.

6. Vorrichtung nach einem der Ansprüche 3 bis 5, dadurch gekennzeichnet, daß die mit dem Koppler (2) auf Seiten der Lichtquelle (L) verbundenen Meß-Detektoren ($D_2$, $D_3$, $D_4$) mit der Auswerte- und Steuerschaltung (6) verbunden sind, in der die Ausgangssignale ($P_2$, $P_3$, $P_4$) dieser Meß-Detektoren auf das Ausgangssignal ($P_{10}$) eines der Monitor-Detektoren ($D_{10}$) normiert werden und aus den normierten Werten ($P_i/P_{10}$) die ein Maß für die Drehgeschwindigkeit bildende Sagnac-Phase (Phi) bestimmt wird.

## Claims

1. Process for correcting measuring signals of a rotational speed measuring fibre gyro, comprising a (4 x 4) - coupler (2) of four adjacent and fused optical fibres with four arms ($a_1$ - $a_4$; $a_{10}$ - $a_{40}$) on both sides of its coupling site, and on the one side of the coupling site is connected by one arm ($a_1$) a light source (L) which radiates at a specified nominal wavelength, preferably a semi-conductor light source such as a laser or the like, and with at least two other arms ($a_2$ - $a_4$), and by at least two other arms ($a_2$ - $a_4$) is connected a respective measuring detector ($D_2$ - $D_4$), and on the other side of the coupling site two arms ($a_{20}$, $a_{30}$) are connected to both ends of a fibre coil (4) wound of a mono-mode optical fibre, and measuring signals distorted by drift of wavelength of the light source due to temperature are corrected, **characterised in that** the output signals ($P_{10}$ - $P_{40}$) on both free arms ($a_{10}$, $a_{40}$) of the coupler (2) at the side of the fibre coil (4) are measured at the nominal wavelength and at the respective actual wavelength, and from the respective output signals is determined a nominal or actual ratio, and the temperature and/or operating current of the light source (L) is regulated in such a manner that the actual ratio equals the nominal ratio.

2. Process according to Claim 1, **characterised in that** the output signals ($P_2$ - $P_4$) at the arms ($a_2$ - $a_4$), which are connected to the measuring detectors ($D_2$ - $D_4$), of the (4 x 4) - coupler at the side of the light source (L) are related to the output signal on one of the two free arms ($a_{10}$, $a_{40}$) at the side of the fibre coil (4), and from this normed value is determined a measure for the Sagnac phase which establishes the rotational speed.

3. Fibre gyro comprising a (4 x 4) - coupler (2) of four adjacent and fused optical fibres with four arms ($a_1$ - $a_4$; $a_{10}$ - $a_{40}$) on both sides of its coupling site, and on the one side of the coupling site is connected by one arm ($a_1$) a light source (L) which radiates at a specified nominal wavelength, preferably a semi-conductor light source such as a laser or the like, and with at least two other arms ($a_2$ - $a_4$) is connected a respective measuring detector ($D_2$ - $D_4$), and on the other side of the coupling site are two arms ($a_{10}$, $a_{40}$) connected to both ends of a fibre coil (4) wound of a mono-mode optical fibre, **characterised in that** at the side of the fibre coil (4) both free arms ($a_{10}$, $a_{40}$) of the coupler (2) connect to a respective monitor detector ($D_{10}$, $D_{40}$), the output signals ($P_{10}$, $P_{40}$) of which are fed to an evaluation and control circuit (6) in which the nominal ratio (($P_{10}$ / $P_{40}$)$_0$) of both output signals at the nominal wavelength (Lambda$_0$) is stored and the actual ratio ($P_{10}$ / $P_{40}$) is determined, and that a heating and cooling device (P, Th) is provided for the light source (L) for setting the temperature (T) of the light source (L) and/or a device (6) for setting the operational current ($I_L$) of the light source (L), which receive respective setting signals from the evaluation and control circuit (6) so that the actual ratio equals the nominal ratio.

4. Device according to Claim 3, **characterised in that**, when using a semi-conductor light source (L), the heating and cooling device (P, Th) is attached directly to the chip of the light source (L).

5. Device according to Claim 3 or 4, **characterised in that** the heating and cooling device is provided in the form of a Peltier element (P) in conjunction with a thermistor (Th) for determining the temperature (T) of the light source (L).

6. Device according to one of Claims 3 to 5, **characterised in that** the measuring detectors ($D_2$, $D_3$, $D_4$), which are connected to the coupler 2 at the side of the light source (L), are connected to the evaluation and control circuit (6) where the output signals ($P_2$, $P_3$, $P_4$) of these measuring detectors are normed to the output signal ($P_{10}$) of one of the monitor detectors ($D_{10}$), and from the normed values ($P_i$ / $P_{10}$) is determined a Sagnac phase (Phi) which establishes a measure for the rotational speed.

## Revendications

1. Procédé pour corriger les signaux de mesure d'un gyromètre à fibres optiques mesurant la vitesse de rotation, ce gyromètre présentant un coupleur (2) type 4 x 4 de quatre fibres optiques contiguës et soudées les unes aux autres, avec quatre bras ($a_1$-$a_4$ ; $a_{10}$-$a_{40}$) sur chacun des deux côtés de sa zone de couplage, zone sur un côté de laquelle une source de lumière (L) émettant avec une longueur d'onde de consigne prédéterminée, de préférence une source de lumière à semi-conducteur telle qu'un laser ou analogue, est reliée à un bras ($a_1$) et des détecteurs de mesure ($D_2$-$D_4$) sont reliés à au moins deux autres bras ($a_2$-$a_4$), respectivement, et sur l'autre côté de laquelle deux bras ($a_{20}$, $a_{30}$) sont reliés aux deux extrémités d'une bobine de fibre (4) enroulée à partir d'une fibre optique monomode, avec correction des signaux de mesure affectés par la dérive de la longueur d'onde de la source de lumière en fonction de la température, **caractérisé** par le fait que les signaux de sortie ($P_{10}$, $P_{40}$) sont mesurés sur les deux bras libres ($a_{10}$, $a_{40}$) du coupleur (2) du côté de la bobine de fibre (4) à la longueur d'onde de consigne et à la longueur d'onde effective respective et qu'à partir des signaux de sortie respectifs sont définis un rapport de consigne et un rapport effectif et que la température et/ou le courant de service de la source de lumière (L) sont réglés de manière que le rapport effectif soit égal au rapport de consigne.

2. Procédé suivant la revendication 1, **caractérisé** par le fait que les signaux de sortie ($P_2$-$P_4$) sur les deux bras ($a_2$-$a_4$) du coupleur (2) du type 4 x 4, reliés aux détecteurs de mesure ($D_2$-$D_4$), côté source de lumière (L), sont mis en relation avec le signal de sortie sur l'un des deux bras libres ($a_{10}$, $a_{40}$), côté bobine de fibre (4), et que la phase de Sagnac qui donne une mesure de la vitesse de rotation est déterminée à partir de cette valeur normée.

3. Gyromètre à fibres optiques comprenant un coupleur (2) type 4 x 4 de quatre fibres optiques contiguës et soudées les unes aux autres, avec quatre bras ($a_1$-$a_4$ ; $a_{10}$-$a_{40}$) sur chacun des deux côtés de sa zone de couplage, zone sur un côté de laquelle une source de lumière (L) émettant avec une longueur d'onde de consigne prédéterminée, de préférence une source de lumière à semi-conducteur telle qu'un laser ou analogue, est reliée à un bras ($a_1$) et des détecteurs de mesure ($D_2$-$D_4$) sont reliés à au moins deux autres bras ($a_2$-$a_4$), respectivement, et sur l'autre côté de laquelle deux bras ($a_{20}$, $a_{30}$) sont reliés aux deux extrémités d'une bobine de fibre (4) enroulée à partir d'une fibre optique monomode, **caractérisé** par le fait qu'un détecteur de moniteur ($D_{10}$, $D_{40}$) est relié à chacun des deux bras libres ($a_{10}$, $a_{40}$) du coupleur (2) côté bobine de fibre (4), détecteur dont les signaux de sortie ($P_{10}$, $P_{40}$) sont amenés à un circuit d'exploitation et de commande (6) dans lequel est mémorisé le rapport de consigne (($P_{10}$/$P_{40}$)$_0$) des deux signaux de sortie à la longueur d'onde de consigne ($\lambda_0$) et le rapport effectif ($P_{10}$/$P_{40}$) est déterminé, et qu'il est prévu pour la source de lumière (L) un dispositif de chauffage et de refroidissement (P, Th) pour le réglage de la température (T) de la source de lumière (L) et/ou un dispositif (6) pour le réglage du courant de fonctionnement ($I_L$) de la source de lumière (L), ces dispositifs recevant respectivement des signaux de réglage du circuit d'exploitation et de commande (6) de telle manière que le rapport effectif soit égal au rapport de consigne.

4. Dispositif suivant la revendication 3, **caractérisé** par le fait qu'en cas d'utilisation d'une source de lumière (L) à semi-conducteur, le dispositif de refroidissement et de chauffage (P, Th) est directement disposé sur la puce de la source de lumière (L).

5. Dispositif suivant la revendication 3 ou 4, **caractérisé** par le fait que le dispositif de chauffage et de refroidissement est constitué par un élément Peltier (P) en combinaison avec une thermistance (Th) pour déterminer la température de la source de lumière (L).

6. Dispositif suivant l'une des revendications 3 à 5, **caractérisé** par le fait que les détecteurs de mesure ($D_2$, $D_3$, $D_4$) reliés au coupleur (2) sur le côté de la source de lumière (L) sont reliés au circuit d'exploitation et de commande (6) dans lequel les signaux de sortie ($P_2$, $P_3$, $P_4$) de ces détecteurs de mesure sont normés sur le signal de sortie ($P_{10}$) d'un détecteur de moniteur ($D_{10}$) et la phase de sagnac (Phi) qui est une mesure de la vitesse de rotation est déterminée à partir des valeurs normées ($P_i$/$P_{10}$).

EP 0 607 526 B1